# EUROPÄISCHE PATENTSCHRIFT

(11) **EP 1 216 214 B1**
(45) Veröffentlichungstag und Bekanntmachung des Hinweises auf die Patenterteilung: **02.05.2003**
(21) Anmeldenummer: 00965848.5
(22) Anmeldetag: 14.09.2000
(51) Int. Cl.: C04B 41/72

(54) **KOMBINATIONSELEKTRODE FÜR DIE ELEKTROCHEMISCHE SANIERUNG VON KORROSIONSGESCHÄDIGTEM STAHLBETON UND VERFAHREN ZU DEREN ANSTEUERUNG**
COMBINATION ELECTRODE FOR THE ELECTROCHEMICAL RESTORATION OF CORROSION-DAMAGED REINFORCED CONCRETE AND CORRESPONDING METHOD FOR CONTROLLING THE SAME
ELECTRODE COMBINEE POUR LA REGENERATION ELECTROCHIMIQUE DU BETON ARME ENDOMMAGE PAR LA CORROSION, ET PROCEDE DE COMMANDE Y RELATIF

(30) Priorität: 15.09.1999 DE 19944974; 18.01.2000 DE 10001706
(43) Veröffentlichungstag der Anmeldung: 26.06.2002
(73) Patentinhaber: CITec GmbH, 01462 Cossebaude (DE)
(72) Erfinder: SCHNECK, Ulrich, D-01462 Cossebaude (DE); WINKLER, Thomas, D-90480 Nürnberg (DE); GRÜNZIG, Hagen, D-01129 Dresden (DE)
(74) Vertreter: Kaufmann, Sigfrid, Doz. Dr.-Ing. habil.
(86) Internationale Anmeldenummer: DE0003192
(87) Internationale Veröffentlichungsnummer: WO01019755

(56) Entgegenhaltungen:
- WO-A-90/10767
- WO-A-94/04474

## Beschreibung

Die Erfindung betrifft eine Kombinationselektrode für die elektrochemische Sanierung von korrosionsgeschädigtem Stahlbeton gemäß Anspruch 1 und ein Verfahren zu deren Ansteuerung gemäß Anspruch 11.

Die in der Bautechnik eingesetzten mineralischen Baustoffe wie Beton, Zement oder Mörtel werden üblicherweise mit Stahlelementen verstärkt, die dazu in den mineralischen Baustoff eingebettet werden. Bei einem fehlerfrei hergestellten Betonelement sind diese Stahlelemente mit einer so starken Betonschicht überzogen, daß das Stahlelement in der Regel dauerhaft vor Korrosion geschützt ist. Der Korrosionsschutz der Betonschicht beruht auf der Alkalität des Wassers, das sich in den Poren des Betons befindet und einen pH-Wert aufweist, der größer als 12,5 ist. Auf der Stahloberfläche bildet sich unter diesen Bedingungen eine dünne, festhaftende Oxidschicht, die eine Korrosion des Stahlelements praktisch vollständig verhindert. Aus diesem Grund kann Stahlbeton für Außenteile, die der Witterung ausgesetzt sind, verwendet werden. Unter ungünstigen Bedingungen, insbesondere bei fehlerhafter Bauausführung und besonders salzhaltigen Umgebungsbedingungen, kann jedoch der Korrosionsschutz der Bewehrung beeinträchtigt werden. Dabei erfolgt, wenn Kohlendioxid aus der Luft mit den alkalischen Bestandteilen des Zements reagiert, eine Carbonatisierung des Betons. Damit sinkt der pH-Wert ab, so daß kein Korrosionsschutz mehr gegeben ist. Eine weitere, häufig auftretende Korrosionsursache ist das Eindringen von Chloriden in den Beton, beispielsweise bei Einsatz der Betonbauteile als Fahrbahn oder in der Nähe einer Fahrbahn beim Einsatz von Tausalz. Beide Prozesse beginnen an der Betonoberfläche und setzen sich ins Innere des Betons zu den dort einbetonierten Stahlteilen fort, wobei sich deren Oxidschicht auflöst. Um die Zerstörung des Betons durch Abplatzen infolge voluminöser Korrosionsprodukte zu verhindern, muß der chloridhaitige Beton ausgetauscht oder das Chlorid selbst aus dem Beton entfernt werden.

Es sind verschiedene Methoden bekannt, um das kontaminierte Material auszutauschen. Bei diesen physikalischen Methoden wird das kontaminierte Material entfernt und durch frischen Beton ersetzt. Dabei handelt es sich jedoch um eine aufwendige und somit teurere Lösung, die zudem nur bei Bereichen, die bereits als geschädigt erkannt worden sind, wirksam ist.

Deshalb ist eine Methode vorgeschlagen worden, bei der die Chloride elektrochemisch durch lonenmigration aus dem Beton entfernt werden. Auf diese Weise wird die Chloridkonzentration in dem Beton drastisch verringert, so daß ein Austausch des Betons nicht mehr notwendig ist. Die von J. E. Slater in Materials Performance, 1976, 21-26, beschriebene Methode umfaßt die Anwendung eines elektrischen Potentials zwischen der inneren Bewehrung und einer Oberflächenelektrode, die in einen flüssigen Elektrolyten, der sich auf der Oberfläche des Betons befindet, eingetaucht ist. Dabei bildet die Oberflächenelektrode den positiven Pol des elektrischen Feldes, wodurch die in dem Beton enthaltenen, negativ geladenen Chloridionen durch den Beton migrieren, aus diesem austreten und in den Elektrolyt gelangen. Im Elektrolyt werden die Chloridionen an der positiven Elektrode zu gasförmigem Chlor oxidiert oder reagieren chemisch mit Komponenten, die in dem Elektrolyt enthalten sind. Allerdings hat die von Slater vorgeschlagene Methode mehrere Nachteile: Zum einen benötigt diese Methode die Anwendung von Spannungen zwischen 100 und 120 V. Derart hohe Spannungen, die über einen Zeitraum von 24 Stunden angewendet werden müssen, um ca. 90 % der Chloride in dem Beton zu entfernen, sind aus sicherheitstechnischen Gründen nicht akzeptabel. Außerdem können die damit entstehenden Kosten sogar die herkömmlicher Techniken übersteigen. Zum anderen wird der verwendete flüssige Elektrolyt von Dämmen zurückgehalten, die auf der Betonoberfläche geschaffen werden müssen. Die Methode ist daher nur bei horizontalen Betonflächen einsetzbar. Dies bedeutet einen hohen Aufwand zur Vorbereitung der Chloridentziehung und schränkt darüber hinaus die Anwendbarkeit der Methode stark ein. Ein weiterer Nachteil dieser Methode ist es, daß die im Stahlbeton vorhandenen Inhomogenitäten (Betondeckung, Betondichte, Feuchtegehalt, Bewehrungsdichte bezogen auf die Betonoberfläche), die bei der gewünschten großflächigen Bauteilbehandlung zu stark unterschiedlicher Verfahrensintensität führen, nicht besonders berücksichtigt werden.

Hinsichtlich des letztgenannten Problems schlägt DE 4 229 072 A1 einen Elektrolytspeicher mit einem Widerstand R >> 0 vor, so daß partielle Überhitzungen z. B. bei vorstehender einzelner Bewehrung mit dem dann resultierenden kleinen R_{Beton} durch den R_{Elektrolyt} kompensiert werden. Nachteil dieser Lösung ist, daß die Verfahrensspitzen nur automatisch abgeschnitten werden, ohne daß eine Regelungsnachführung bei partieller Unterfunktion (R_{Beton} groß) erfolgt.

US 5.228.959 schlägt als Elektrolyt eine haftende Beschichtung vor, die an vertikalen Oberflächen oder sogar an den Unterseiten von Betonelementen aufgebracht werden kann und an diesen haftet. In die haftende Beschichtung wird eine Elektrode eingebettet, die den positiven Pol des elektrischen Systems bildet. Wenn das Verfahren beendet ist, das heißt, wenn das Niveau der Chloridkontamination auf ein gewünschtes Niveau verringert worden ist, werden sowohl die haftende Beschichtung als auch die Elektrode von der Betonfläche entfernt. Dabei umfaßt das Verfahren im einzelnen das Aufbringen einer entfernbaren haftenden elektrolytischen Beschichtung auf die Oberfläche des Betons; das Anlegen einer Gleichspannung zwischen der Bewehrung und der Elektrode, um die Migration der negativen Ionen zu bewirken; Unterbrechen der angelegten Spannung und Entfernen der haftenden Beschichtung, wenn das gewünschte Niveau der lonenmigration erreicht worden ist; periodisches Messen der Potentialdifferenz zwischen der Bewehrung und der Referenzelektrode und zeitweises Unterbrechen der Gleichspannung, wenn die Potentialdifferenz auf die Entwicklung von Wasserstoff hindeutet. Obwohl dieses Verfahren eine Reihe von Vorteilen gegenüber der von Slater vorgeschlagenen Methode bietet, hat sie den Nachteil, daß das elektrochemische System nur einmal verwendet werden kann. Eine Wiederverwendung ist nicht möglich. Auch wenn in US 5.228.959 angegeben wird, daß das verwendete Material einfach und billig entsorgt werden kann, so ist diese aus Sicht der sich verschärfenden Umweltstandards und der zunehmenden Verteuerung der Entsorgung nicht mehr hinnehmbar. Überdies ist die mit dem Einsatz des Verfahrens verbundene Freisetzung von Chlor außerordentlich umweltfeindlich.

Dieses Verfahren ist in mehreren Patentanmeldungen modifiziert worden. Beispielsweise schlägt EP 0 398 117 A1 ein Material für die haftende Elektrolytschicht in Form von Zellulosebrei vor, der mit Wasser oder einer anderen Lösung wie Calciumhydroxid in einer Düse vorgemischt und auf die Oberfläche des zu behandelnden Bereiches aufgesprüht wird. Ebenso schlägt diese Anmeldung für die Elektrode ein eisenhaltiges Material vor, das gegenüber Chlor reaktiv ist, um die Freisetzung von freiem Chlorgas in die Umgebung zu minimieren. Dies bietet den Vorteil, daß zwar weniger Chlor in die Umgebung freigesetzt wird, hat jedoch den Nachteil, daß die Bildung von Chlor nicht vollständig unterdrückt wird. Überdies wird so die Elektrode im Laufe der Anwendung des Verfahrens zersetzt, so daß auch aus diesem Grund nur ein einmaliger Einsatz des Verfahrens möglich ist.

Es ist daher Ziel der vorliegenden Erfindung, ein Mittel zur elektrochemischen Sanierung von korrosionsgeschädigtem Stahlbeton vorzuschlagen, das die oben beschriebenen Nachteile der Verfahren des Standes der Technik überwindet. Dabei steht die Aufgabe, eine kostengünstige Lösung vorzuschlagen, die mit geringem technischen Aufwand verbunden, nicht nur einmalig, sondern mehrmals einsetzbar und auf Inhomogenitäten im zu sanierenden Bauteil optimal angepaßt ist.

Erfindungsgemäß wird dies durch eine Kombinationselektrode gelöst, die aus einer dimensionsstabilen Elektrode als Anode; einem vorgefertigten, wiederverwendbaren Elektrolytspeicher; einem Verdunstungsschutz; einem vorgefertigten, wechselbaren, anionischen lonenaustauscherelement; einer Zentralbefestigung mit Dübel, Ankerstange und Exzenter-Schnellspannvorrichtung; einer Referenzelektrode am Dübelkopf; einer Befeuchtungseinrichtung; einem Leistungsschaltteil zur anodischen Regelung; einem Meßsystem zur Zustandsbestimmung am lonenaustauscherelement sowie elektrischen Anschlüssen für die Referenzelektrode usw. besteht. Dabei können die dimensionsstabile Elektrode, der Verdunstungsschutz, der Elektrolytspeicher und der Ionenaustauscher in Form einer Sandwich-Konstruktion miteinander verbunden sein.

Bezogen auf das zu sanierende Bauteil ist die Kombinationselektrode kleinflächig (ca. 0,6 x 0,6 m).

Die erfindungsgemäße Kombinationselektrode bietet den Vorteil, daß sie industriell vorgefertigt werden kann. Überdies enthält sie alle Komponenten, die für eine aktive Verfahrenssteuerung notwendig sind. Die mehrteilig aufgebaute Kombinationselektrode läßt die Reaktivierung des Ionenaustauschmaterials zur Wiederaufbereitung zu. Ein wesentlicher Vorteil der Erfindung ist, daß kein aktives Chlor gebildet wird. Die dem Beton entzogenen Chloridionen werden an das lonenaustauschmaterial gebunden, aus dem sie durch die Reaktivierung dieses Materials entfernt werden können. Die Kombinationselektrode ist daher wiederverwendbar. Die Elektrode ist nicht selbsthaftend.

Vorzugsweise besteht die dimensionsstabile Elektrode aus oberflächenmodifiziertem Titan, Tantal oder ähnlichen Materialien.

Der Elektrolytspeicher besteht aus faserigem mineralischem Material, vorzugsweise aus Glasvlies. Damit verhält er sich unter extrem sauren oder basischen Belastungen chemisch neutral, Verfärbungen auf der Betonoberfläche werden vermieden; zudem ist er geometrisch beständig und verfügt über ein gutes Wasserspeichervermögen.

Der Ionenaustauscher ist so ausgeführt, daß anionisches lonenaustauschermaterial auf einem perforierten Träger befestigt ist und derart vorkonfektioniert als Schicht in die Kombinationselektrode, vorzugsweise zwischen Elektrolytspeicher und Elektrode, eingelegt werden kann. Damit kann die Elektrode in allen Einbaulagen eingesetzt und bei Verbrauch des lonenaustauschers schnell und unkompliziert gewartet werden.

Die Sensorik zur on-line-Zustandskontrolle des lonenaustauschermaterials zeichnet sich dadurch aus, daß zwischen lonenaustauscherschicht und dimensionsstabiler Elektrode ein Meßsystem zur Überwachung des Verbrauchszustandes eingebaut ist, das über ein Rechnerwerk zyklisch abgetastet wird. Dabei wird in die Kombinationselektrode eine Hilfselektrode oder ein Chloridsensor integriert. Beim Auftreffen von Chloridionen auf die Hilfselektrode entsteht ein meßbares Signal.

Befestigung, Schnellspannvorrichtung und Referenzelektrode sind so ausgeführt, daß an einem Kunststoffdübel eine Referenzzelle mit wasserhaltendem, leicht flexiblem Diaphragma (zum Beispiel MnO₂ und wassergetränkter Filz) angebracht ist. Im Einsatz wird der Dübel mit der Referenzelektrode voran in ein bevorzugt zentrisch innerhalb der Elektrodenfläche liegendes Bohrloch, das sich in definiertem Abstand zur maßgeblichen Bewehrung befindet, gebracht. Auf die Ankerstange, die zur Aufnahme der Referenzelektrodenzuleitung hohl ausgeführt ist und über eine Setztiefenbegrenzung verfügt, wird das Sandwichteil der Kombinationselektrode geschoben und mit einer darüber geschobenen Hülse, an der eine Exzenterwelle mit Hebel angebracht ist, befestigt.

Im folgenden wird die Erfindung mit Bezug auf die beiliegenden Zeichnungen näher erläutert.

Fig. 1 ist eine schematische Querschnittsdarstellung der Kombinationselektrode.

Fig. 2 zeigt in Schrägdraufsicht den Einsatz der erfindungsgemäßen Kombinationselektrode.

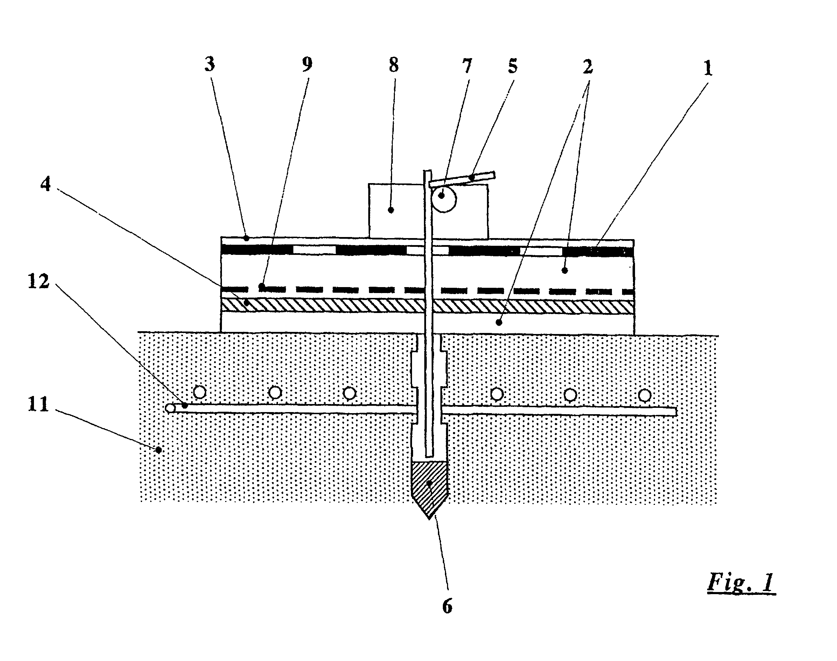

Die in Fig. 1 dargestellte, mehrteilige und vorgefertigte Kombinationselektrode besteht aus der dimensionsstabilen Elektrode 1; dem vorgefertigten, wiederverwendbaren Elektrolytspeicher 2; dem Verdunstungsschutz 3 und dem vorgefertigten, wechselbaren, anionischen lonenaustauscherelement 4, die als Sandwichkonstruktion miteinander verbunden sind. Am Dübelkopf der Zentralbefestigung mit Dübel, Ankerstange und Exzenter-Schnellspannvorrichtung 5 befindet sich die Referenzelektrode 6. Außerdem ist die Kombinationselektrode mit einer Befeuchtungseinrichtung 7, einem Leistungsschaltteil zur anodischen Regelung 8, einem Meßsystem 9 zur Zustandsbestimmung am lonenaustauscherelement sowie (nicht gezeigten) elektrischen Anschlüssen für die Referenzzelle ausgestattet. Beim Einsatz der Kombinationselektrode wird der Dübel mit der Referenzelektrode 6 in ein Bohrloch in dem Beton 11 eingebracht. Das Bohrloch befindet sich dabei vorzugsweise zentrisch innerhalb der Elektrodenoberfläche und in definiertem seitlichen Abstand zur maßgebenden Bewehrung 12.

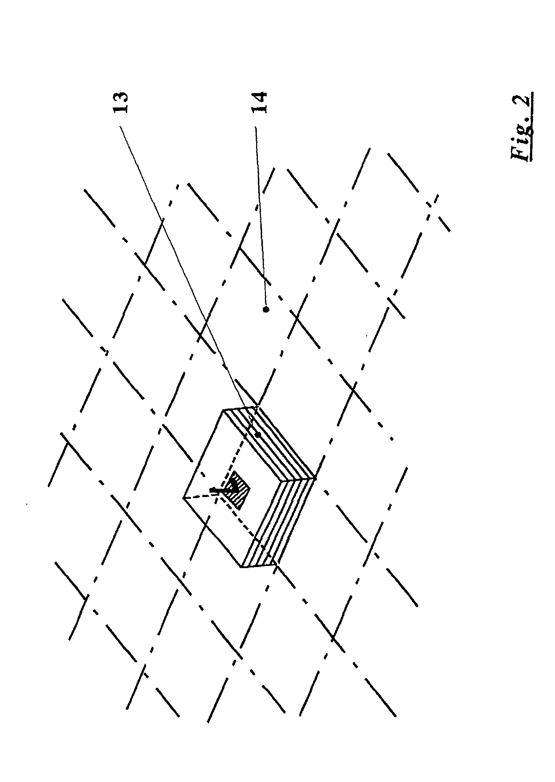

Fig. 2 zeigt die Kombinationselektrode 13 beim Einsatz auf einem zu sanierenden Betonelement 14. Die Betonteiloberfläche wird dazu in kleine Teilflächen aufgeteilt. Vorzugsweise ist eine derartige Teilfläche 60 x 60 cm groß.

Das Verfahren zur Ansteuerung eines Elektrodensystems zielt auf die kurzzeitige elektrochemische Sanierung von korrosionsgeschädigtem Stahlbeton und umfaßt (1) die Unterteilung der zu sanierenden zweidimensionalen Fläche eines Bauwerkes aus Stahlbeton in beliebig viele, gleich große Rasterflächen; (2) die elektrochemische, physikalische und chemische Charakterisierung, bestehend aus Messung des Ruhepotentials, galvanischer Pulsmessung, Erfassung des Bewehrungsverlaufes der Deckbewehrung, der Betondeckung, des Porenraums, der Feuchte, des Chloridgehaltes und der Carbonatisierungstiefe; (3) die Montage der Verbundelektroden an den Rasterflächen; (4) das Durchführen von Kontrollmessungen an jeder Rasterfläche zur Bestimmung des Ruhepotentials (E_{ref}), der Kontrolle der elektrischen Kontakte und zur Bestimmung der zeitlichen Änderung des Stromes in Folge der externen Spannung (ΔI_{AK}); (5) das Festlegen der Startwerte, die die Klemmspannung zwischen Anode und Katode (E_{AK}), die minimale Klemmspannung ohne externe Spannung (E_{AK,min}), die Frequenz der Pulsweitenmodulation (f_{PWR}), die Anschaltzeit der externen Spannung (t_{An}), die Ausschaltzeit der externen Spannung (t_{Aus}), das minimale katodische Referenzpotential (E_{ref, min}), den Chloridgehalt zu Sanierungsbeginn (Cl_{Start}) und den Ziel-Chloridgehalt (Cl_{End}) umfassen, an jeder Rasterfläche; (6) das Festlegen von Meß-, Regel- und Abbruchkriterien für jede einzelne Rasterfläche; (7) die Zuführung von Gleichstrom zu der Rasterfläche unter permanenter Überwachung des Referenzpotentials während der Laufzeit der Sanierung, der Spannungsänderung am Chloridsensor und der Ausschaltflanke, wobei die zugeführte Gleichstromleistung während der Laufzeit der Sanierung durch Pulsweitenmodulation so eingestellt wird, daß sie dem Energiebedarf der zu sanierenden Rasterfläche entspricht. Der Durchführung des erfindungsgemäßen Verfahrens geht eine Untersuchung des zu sanierenden Bauwerkes in bezug auf dessen spezifische Merkmale wie beispielsweise dem Abstand der Mantelfläche der Deckbewehrung als Arbeitselektrode sowie die Ermittlung der durchschnittlichen und minimalen Betonüberdeckung an jeder Rasterfläche voraus. Die Kontrollmessungen dienen gleichzeitig der Prüfung der elektrischen Verbindungen sowie dem Erreichen eines niedrigen Elektrolytwiderstandes im Beton, indem eine ausreichende Bauteilfeuchte sichergestellt wird. In Schritt (1) werden die zu sanierenden zweidimensionalen Flächen eines Bauwerkes aus Stahlbeton vorzugsweise in 0,6 x 0,6 m große Rasterflächen unterteilt. Die Überwachung der Spannungsänderung am Chloridsensor in Schritt (7) umfaßt die permanente Abfrage einer Hilfselektrode, um so die Sättigung des lonenaustauschers zu ermitteln. Die Abbruchkriterien, die während der gesamten Laufzeit der Sanierung an jeder Rasterfläche überwacht werden, werden aus der Gruppe ausgewählt, die die im lonenaustauscher enthaltene Gesamtchloridmenge, die der Differenz zwischen dem Chloridgehalt zu Sanierungsbeginn (Cl_{Start}) und dem Ziel-Chloridgehalt (Cl_{End}) im Beton entspricht; das 100 mV-Kriterium, das zur Abschätzung der Alkalitätsreserve dient; und die eingetragene Ladungsmenge umfaßt.

Bei der Durchführung des erfindungsgemäßen Verfahrens wird jeder Rasterfläche exakt soviel Gleichstromleistung während der Sanierung zugeführt, wie diese benötigt. Dieser Leistungsbedarf wird während der Laufzeit des Verfahrens ständig für jede zu sanierende Rasterfläche neu berechnet. Ist die Kapazität des lonenaustauschers erschöpft, kann dieser während der Sanierung mehrfach erneuert werden.

Durch die permanente Abfrage des Chloridsensors kann die Sättigung des Ionenaustauschers in der Verbundelektrode genau ermittelt werden. Wenn der Ionenaustauscher gesättigt ist, wird der Sanierungsprozeß automatisch für die betreffende Rasterfläche unterbrochen, damit keine Chlorgasentwicklung an der Anode auftreten kann. Gleichzeitig wird die Chloridmenge, die der Aufnahmekapazität des Ionenaustauschers entspricht, als Rechenwert in den Prozeß einbezogen.

Eine Verringerung der Gleichstromleistung an einer Elektrode wird durch Pulsweitenmodulation erreicht. Die Pulsweitenmodulation umfaßt eine Zwei-Punkt-Regelung mit den Zuständen Ein und Aus. Über die Variation des zeitlichen Verhältnisses der Ein- und Aus-Phasen wird eine effektive Leistung am Verbraucher, daß heißt den Rasterflächen erreicht. Über konventionelle Längsregler ist eine Verringerung des Gleichstrombedarfes durch Reduzieren der Gleichstromleistung nicht möglich, da die nicht benutzte Energie im Regler in Wärme umgesetzt wird. Das wird durch die Anwendung der Pulsweitenmodulation gemäß der Erfindung verhindert. Mit Hilfe der Pulsweitenmodulation und aufgrund des modularen Aufbaues, der die einzelne Ansteuerung jeder Rasterfläche ermöglicht, wird der Energiebedarf jeder Rasterfläche optimal erfaßt, so daß die eingespeiste Leistung auf die Bedürfnisse angepaßt werden kann. Die für alle Elektroden der Sanierungsfläche verfügbare Gleichspannung wird vom Steuerrechner geschaltet, in die Elektroden gespeist und entsprechend dem Energiebedarf mit geringsten Leistungsverlusten als pulsweitenmodulierte Rechteckspannung geregelt, so daß sich eine individuelle Effektivspannung bzw. ein individueller Effektivstrom zwischen Anode und Katode ergibt, die bzw. der mit jedem Regelzyklus neu gemessen und optimal auf die kinetischen Verhältnisse an jeder Elektrode angepaßt wird. Weiterhin kann das an der Referenzelektrode gemessene und um den ohmschen Widerstand des Betons zwischen Bewehrung und Referenzelektrode verfälschte katodische Potential über die Messung und Auswertung der Steilheit der Ausschaltflanke am Pulsweitenregelungsmodul an jeder Elektrode über den Steuerrechner korrigiert werden (IR-Kompensation).

Bei Einsatz des erfindungsgemäßen Verfahrens kann infolge des modularen Aufbaus der eingesetzten Vorrichtung jede Rasterfläche oder jede Gruppe von Rasterflächen so behandelt werden, wie es der tatsächliche Schädigungsgrad erfordert. Jede Rasterfläche oder jede Gruppe von Rasterflächen kann durch die Laufzeitkontrolle je nach Fortgang der Sanierung individuell weiterbehandelt werden. Durch den Einsatz der Pulsweitenmodulation wird eine verlustarme Leistungszuführung und Leistungssteuerung individuell für jede Rasterfläche in Abhängigkeit von ihrem Bedarf erreicht, so daß eine optimale Sanierung ermöglicht wird. Überdies sind keine großflächigen Sicherheitsvorhalte zur Vermeidung von Verfahrensüberhitzungen notwendig, da jede Rasterfläche in Abhängigkeit vom jeweiligen katodischen Referenzpotential behandelt wird. Damit werden Verfahrensreserven ausgenutzt und außerdem garantiert, daß keine Beschädigungen am Bauwerk auftreten. Ein weiterer Vorteil besteht darin, daß aufgrund der automatischen Verfahrensabschaltung, sobald die Chloridaufnahmefähigkeit des lonenaustauschers erschöpft ist, die Entwicklung von umweltschädigendem Chlorgas verhindert wird, so daß sich das Verfahren durch eine im Vergleich zu den Methoden des Standes der Technik hohe Umweltverträglichkeit auszeichnet.

Des weiteren ist die Erfindung durch eine bessere Bewehrungsanalyse in Verbindung mit kleinflächigen Elektroden gekennzeichnet, wodurch das Verfahren auf die Mantelfläche der wirksamen Bewehrung und nicht, wie die Verfahren des Standes der Technik auf die vereinfachende und unrichtige Annahme, daß Bewehrungsfläche und Betonoberfläche gleich seien, bezogen ist. Aufgrund von bekannten Elektrodenflächen sowie Stromdichteverteilungen kann das Verfahren individuell angepaßt und optimiert werden.

Die erfindungsgemäß eingesetzte Pulsweitenmodulation ermöglicht eine individuelle und dynamische Verfahrensregelung jeder einzelnen Verbundelektrode (0,6 x 0,6 m) ohne größere Leistungsverluste gegenüber den sonst üblichen Konstant- oder geregelten Stromquellen. Zudem erreicht das Verfahren eine Effizienzsteigerung, indem Aktiv-Zeiten verschiedener Verbundelektroden untereinander zeitlich so versetzt werden, daß die Maximalleistung des Systems unterhalb der Gesamtleistung aller Verbundelektroden dimensioniert werden kann. Die Pulsweitenmodulation realisiert eine Effektivspannung für jede Verbundelektrode entsprechend den thermodynamischen Zuständen innerhalb der von der Verbundelektrode überstrichenen Bewehrungsfläche. Parameter der Pulsweitenmodulation sind Frequenz und Tastverhältnis, die ausgehend von den gesetzten Startwerten im Prozeß kontinuierlich angepaßt werden. Durch den Einsatz der Pulsweitenmodulation ist keine Strombegrenzung für die angeschlossene Verbundelektrode erforderlich; aus Sicherheitsgründen wird die zur Verfügung gestellte Gleichspannung auf 40 V festgelegt.

Ein wesentlicher Ausgangsparameter ist verfahrensgemäß also die abgewikkelte Mantelfläche der Deckbewehrung; die Elektrodenfläche der Arbeitselektrode (Bewehrung, Katode) ist zuvor zerstörungsfrei bestimmt worden. Dadurch wird die Stromverteilung wesentlich besser bemessen und optimiert als bei der derzeitigen Betrachtung, die die Elektrodenfläche gleich der Betonoberfläche setzt und dabei zu völlig falschen Bezugswerten kommen kann.

Des weiteren ist es gegenwärtig nicht möglich, Chlorid-Messungen im elektrischen Feld durchzuführen. Der erfindungsgemäß eingesetzte Chloridsensor zeigt als Schwellwertschalter an, daß keine weiteren Chloridionen mehr vom lonentauscher aufgenommen werden können. Somit können sichere Rückschlüsse auf die erreichte Chlorid-Entzugsleistung gezogen werden. Zudem wird eine unbeabsichtigte Chlorgasentwicklung an der Anode verhindert, indem das beschriebene Schwellwertsignal zur Abschaltung der betreffenden Verbundelektrode führt; der Abschaltzustand bleibt solange aufrechterhalten, bis der erschöpfte lonenaustauscher erneuert wird.

Die dargestellte Verwendung der Pulsweitenmodulation macht die Funktion einer Ausschaltflanke der pulsweitenmodulierten Gleichspannung für die permanente IR-Korrektur erst anwendbar, indem in zeitlich sehr kurzer Abfolge derartiger Ausschaltflanken zur Auswertung verfügbar sind. Durch die wesentlich erhöhte Punktschicht der IR-Abfall-Messungen (orts- und zeitaufgelöst) können Sicherheitsgrenzen des Verfahrens (Vermeidung von H₂-Entwicklung) deutlich besser ausgeschöpft werden, was zu einer nachhaltig höheren Effektivität führt.

Schließlich zeichnet sich das Verfahren durch die Möglichkeit der parallelen Vorort- oder Fernsteuerung aus. Infolgedessen können gleichzeitig mehrere Sanierungsvorhaben komfortabel und ressourcensparend bearbeitet und verwaltet werden. Durch die Verwendung des standardisierten Ethernet-Netzwerkes sowohl für die Verkabelung der Verbundelektroden mit dem Steuerrechner als auch zur Auskopplung weiterer Einheiten werden größtmögliche Flexibilität und beste Anbindungsmöglichkeiten garantiert. Autorisierte Drittpersonen (Bauherren, Eigner) können somit zeitnah auf Informationen zum Vorgang zugreifen.

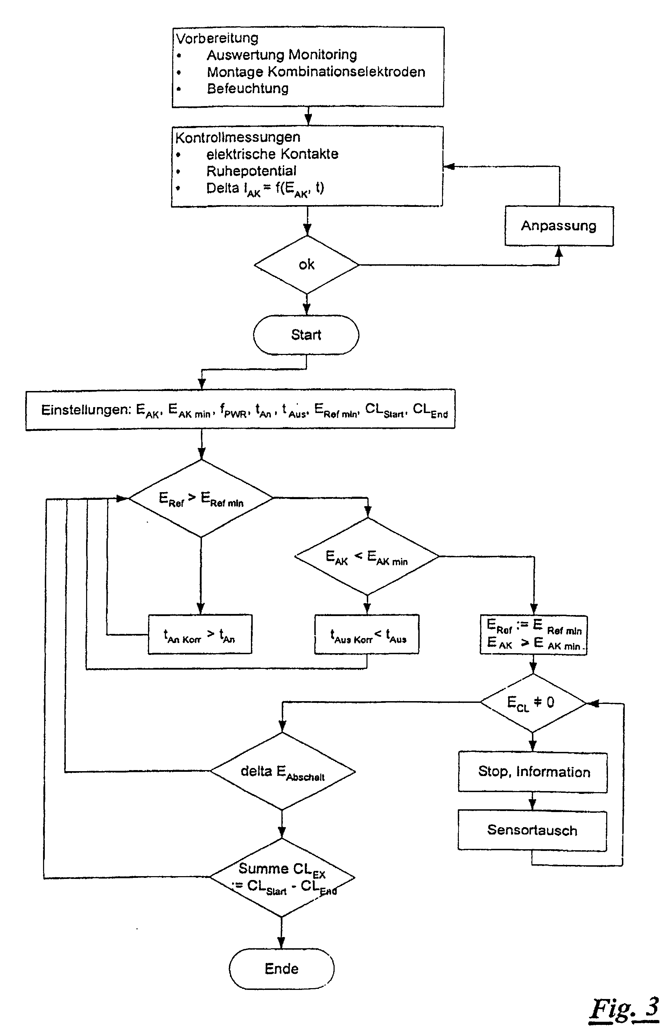

Im folgenden wird das vorgeschlagene Verfahren weiter erläutert; Fig. 3 zeigt hierfür ein Flußdiagramm. Zur Durchführung des Verfahrens wird ein apparativer Aufbau genutzt, der besteht aus einer Verbundelektrode, die auf einer etwa 0,6 x 0,6 m großen Rasterfläche der zu sanierenden zweidimensionalen Stahlbetonoberfläche angebracht ist. Die im Beton enthaltene Stahlbewehrung ist an die Masseleitung angeschlossen. Die Verbundelektrode, die einen Sensorausgang und einen Steuereingang aufweist, ist an Sensorelektronik über eine Sensorleitung zur Meßwertaufnahme und an Steuerelektronik über eine Steuerleitung zur Leistungsregelung angeschlossen sowie mit einem Gleichstrombus verbunden. Zwei Elektronikmodule sind über Netzwerkelektronik und ein Ethernet-Netzwerk mit einem Steuerrechner verbunden.

Das in Fig. 3 veranschaulichte erfindungsgemäße Verfahren besteht aus folgenden Schritten: Nach Abschluß der notwendigen Vorbereitungen, die eine Beurteilung des Bauwerkzustandes beispielsweise hinsichtlich des Abstandes der Bewehrungselemente, die Einteilung der Betonoberfläche in einzelne Rasterflächen, die Montage der Verbundelektroden sowie eine ausreichende Befeuchtung des Betons umfassen, werden Kontrollmessungen zur Überprüfung der elektrischen Kontakte, Bestimmung des Ruhepotentials und der Änderung des Stromes infolge der externen Spannung (ΔI_{AK}), das heißt des Extraktionsstroms durchgeführt. Die Stromänderung ΔI_{AK} ist eine Funktion der Klemmspannung zwischen Anode und Katode (E_{AK}) und der Zeit. Entsprechen diese Werte den Vorgaben, können die weiteren Verfahrensschritte durchgeführt werden, anderenfalls müssen die Werte erneut angepaßt werden. Im folgenden Verfahrensschritt werden über die Steuerelektronik die Ausgangswerte eingestellt. Das sind die Klemmspannung zwischen Anode und Katode (E_{AK}, maximal 40 V), die minimale Klemmspannung ohne externe Spannung (E_{AK}, _{min,} z. B. 20 V), die off-Klemmspannung zwischen Anode und Katode (E_{AK, Aus}), die Frequenz der Pulsweitenmodulation (f_{PWR,} wobei f_{PWR} = t_{An} + t_{Aus}), die Anschaltzeit der externen Spannung (t_{An}), die Ausschaltzeit der externen Spannung (t_{Aus}), das minimale katodische Referenzpotential (E_{ref, min}), den Chloridgehalt zu Sanierungsbeginn (Cl_{Start,} z. B. 3,0 M%, bezogen auf die Zementmasse) und den Ziel-Chloridgehalt (Cl_{End}, z. B. 0,3 M%, bezogen auf die Zementmasse). Nach dem Festlegen der Meß-, Regel- und Abbruchkriterien wird der Rasterfläche Gleichstrom zugeführt. Dabei wird durch den Steuerrechner permanent geprüft, ob das Referenzpotential an der Katode (E_{ref}) größer als das als Schwellenwert festgelegte katodische Referenzpotential (E_{ref, min}) (beispielsweise -1070 mV vs. Cu/CuSO₄) ist. Wenn das der Fall ist, wird der Korrekturwert der Anschaltzeit (t_{An, korr}) größer gestellt als die festgelegte Anschaltzeit (t_{An}) der externen Spannung, so daß die Gleichstromzufuhr fortgesetzt werden kann. Ist E_{ref, min} erreicht oder unterschritten, kann abgeschaltet werden, und es wird geprüft, ob die off-Klemmspannung zwischen Anode und Katode (E_{AK, Aus}) kleiner als die minimal festgelegte Klemmspannung ohne extreme Spannung (E_{AK, min}) ist. Wenn das vor Ablauf von Tₐᵤₛ der Fall ist, wird der Korrekturwert der Ausschaltzeit (t_{Aus, korr}) kleiner als die Ausschaltzeit (t_{Aus}) der externen Spannung gestellt, so daß die Gleichstromzufuhr fortgesetzt werden kann. Ist E_{AK, Aus} größer als E_{AK} und das Referenzpotential an der Katode (E_{ref}) gleich dem minimal festgelegten katodischen Referenzpotential (E_{ref, min}), so wird anschließend geprüft, ob eine Spannungsänderung am Chloridsensor (ΔE_{CL}), das sogenannte "Durchbruchpotential", welches im Millivolt-Bereich liegt, ungleich Null ist. Ist ΔE_{cl} ungleich Null, wird das Verfahren unterbrochen, der lonenaustauscher erneuert und anschließend das Verfahren unter erneuter Prüfung von ΔE_{cl} fortgeführt. Ist E_{cl} gleich Null und die Differenz zwischen dem Chloridgehalt bei Sanierungsbeginn (Cl_{Start}) und dem Ziel-Chloridgehalt (Cl_{End}) gleich der Summe der entfernten Chloridmenge, wird die Änderung des Referenzpotentials nach Abschalten der externen Spannung, z. B. minimal 100 mV/4 Stunden, bestimmt. Wenn der Wert nicht unterschritten wird, ist das Sanierungsziel erreicht, so daß das Verfahren abgeschlossen ist. Anderenfalls wird das Verfahren fortgesetzt.

### Liste der verwendeten Bezugszeichen

- 1: dimensionsstabile Elektrode
- 2: vorgefertigter, wiederverwendbarer Elektrolytspeicher
- 3: Verdunstungsschutz
- 4: vorgefertigtes, wechselbares, anionisches lonenaustauscherelement
- 5: Zentralbefestigung mit Dübel, Ankerstange und Exzenter-Schnellspannvorrichtung
- 6: Referenzelektrode am Dübelkopf
- 7: Befeuchtungseinrichtung
- 8: Leistungsschaltteil zur anodischen Regelung
- 9: Meßsystem zur Zustandsbestimmung am lonenaustauscherelement
- 11: Beton
- 12: Bewehrung
- 13: Kombinationselektrode
- 14: Betonelement (Bauteiloberfläche)

## Patentansprüche

1. Kombinationselektrode für die elektrochemische Sanierung von korrosionsgeschädigtem Stahlbeton, **dadurch gekennzeichnet, daß** sie die folgenden Komponenten umfaßt:
- dimensionsstabile Elektrode (1);
- vorgefertigter, wiederverwendbarer Elektrolytspeicher (2);
- Verdunstungsschutz (3);
- vorgefertigtes, wechselbares, anionisches lonenaustauscherelement (4);
- Zentralbefestigung mit Dübel, Ankerstange und Exzenter-Schnellspannvorrichtung (5);
- Referenzelektrode (6) am Dübelkopf;
- Befeuchtungseinrichtung (7)
- Leistungsschaltteil zur anodischen Regelung (8);
- Meßsystem (9) zur Zustandsbestimmung am lonenaustauscherelement sowie
- elektrische Anschlüsse für die Referenzelektrode.

2. Kombinationselektrode nach Anspruch 1, **dadurch gekennzeichnet, daß** die dimensionsstabile Elektrode (1), der Verdunstungsschutz (3), der Elektrolytspeicher (2) und der lonenaustauscher (4) in Form einer Sandwich-Konstruktion miteinander verbunden sind.

3. Kombinationselektrode nach Anspruch 1 oder 2, **dadurch gekennzeichnet, daß** sie eine Fläche von etwa 0,6 x 0,6 m² aufweist.

4. Kombinationselektrode nach Anspruch 1 bis 3, **dadurch gekennzeichnet, daß** die dimensionsstabile Elektrode (1) aus oberflächenmodifiziertem Titan, Tantal oder ähnlichen Werkstoffen besteht.

5. Kombinationselektrode nach Anspruch 1 bis 4, **dadurch gekennzeichnet, daß** der Elektrolytspeicher (2) aus faserigem mineralischem Material, vorzugsweise aus Glasvlies, besteht.

6. Kombinationselektrode nach Anspruch 1 bis 5, **dadurch gekennzeichnet, daß** das lonenaustauscherelement (4) ein anionisches lonenaustauschermaterial umfaßt, das auf einem perforierten Trägermaterial fixiert ist, welches zwischen dem Elektrolytspeicher (2) und der Elektrode (1) als Schicht eingebracht ist.

7. Kombinationselektrode nach Anspruch 1 bis 6, **dadurch gekennzeichnet, daß** das Meßsystem (9), das zur Überwachung des Verbrauchszustandes des lonenaustauschermaterials dient, zwischen dem lonenaustauscherelement (4) und der dimensionsstabilen Elektrode (1) angeordnet ist.

8. Kombinationselektrode nach Anspruch 1 bis 7, **dadurch gekennzeichnet, daß** das Meßsystem (9) zur zyklischen Abtastung des Verbrauchszustandes des lonenaustauschermaterials (4) über eine Meßelektronik mit einem Rechnernetzwerk verbunden ist.

9. Kombinationselektrode nach Anspruch 1 bis 8, **dadurch gekennzeichnet, daß** das Meßsystem (9) aus einem Sensor oder einer Hilfselektrode besteht.

10. Kombinationselektrode nach Anspruch 9, **dadurch gekennzeichnet, daß** der Sensor ein Chloridsensor ist.

11. Verfahren zur Ansteuerung eines Elektrodensystems für die kurzzeitige elektrochemische Sanierung von korrosionsgeschädigtem Stahlbeton unter Verwendung einer Kombinationselektrode nach einem der Ansprüche 1 bis 10, **dadurch gekennzeichnet, daß** die Ansteuerung der Verbundelektroden (Kombinationselektroden) mittels pulsweitenmodulierter Gleichspannung erfolgt, wobei eine konstante Spannung von 40 Volt ohne Begrenzung des Stroms für die einzelne Verbundelektrode verwendet wird, ein Ausgangsparameter zur Verfahrensbemessung die abgewickelte Mantelfläche der Deckbewehrung ist, ein Chloridsensor zur Signalisierung und Abschaltung des Verfahrens bei Sättigung des lonentauschers verwendet wird, die Ausschaltflanke der pulsweitenmodulierten Gleichspannung für die permanente IR-Korrektur herangezogen wird und die Möglichkeit der parallelen Vorort- und Fernsteuerung über beliebige Distanzen hinweg besteht.

12. Verfahren nach Anspruch 11, **dadurch gekennzeichnet, daß** die pulsweitenmodulierte Gleichspannung auf jede kleinflächig angeordnete Verbundelektrode angewendet wird, welche ihrerseits die zur Regelung der pulsweitenmodulierten Gleichspannung notwendigen Signale liefert.

13. Verfahren nach Anspruch 11, **dadurch gekennzeichnet, daß** die pulsweitenmodulierte Gleichspannung in Frequenz und Tastverhältnis den Regel-erfordernissen angepaßt wird.

14. Verfahren nach Anspruch 11, **dadurch gekennzeichnet, daß** als Fläche der Arbeitselektrode (Kathode) die abgewickelte Mantelfläche der zuvor gemessenen Deckbewehrung angesetzt wird.

15. Verfahren nach Anspruch 11, **dadurch gekennzeichnet, daß** das entsprechende Meßsignal des in der Verbundelektrode integrierten Chloridsensors zur Signalisierung des eingetretenen Sättigungszustandes im lonentauscher und zur Abschaltung des Verfahrens in der betreffenden Verbundelektrode führt.

16. Verfahren nach Anspruch 11, **dadurch gekennzeichnet, daß** durch Messung und Auswertung des Spannungsabfalls an der Ausschaltflanke eines Ein-Pegels eine kontinuierliche IR-Korrektur der Referenzpotentiale einer Verbundelektrode durchgeführt wird.

## Claims

1. A combination electrode for the electrochemical amelioration of corrosion-damaged reinforced concrete, **characterised in that** it comprises the following components:
- dimensionally stable electrode (1);
- prefabricated, re-usable electrolyte reservoir (2);
- evaporation protection (3);
- prefabricated, exchangeable anionic ion exchanger element (4);
- central fixing with plug, anchor bar and eccentric quick-action tightening facility (5);
- reference electrode (6) at the head of the plug;
- humidifying facility (7)
- power component for anodic control (8);
- measuring system (9) for determination of the state of the ion exchanger element and
- electrical connections for the reference electrode.

2. A combination electrode as under Claim 1, **characterised in that** the dimensionally stable electrode (1), the evaporation protection (3), the electrolyte reservoir (2) and the ion exchanger (4) are joined together in the form of a sandwich construction.

3. A combination electrode as under Claims 1 or 2, **characterised in that** it possesses a surface area of around 0.6 x 0.6 m².

4. A combination electrode as under Claims 1 to 3, **characterised in that** the dimensionally stable electrode (1) is made of surface-modified titanium, tantalum or similar materials.

5. A combination electrode as under Claims 1 to 4, **characterised in that** the electrolyte reservoir (2) is made of a fibrous mineral material, preferably of glass fleece.

6. A combination electrode as under Claims 1 to 5, **characterised in that** the ion exchanger element (4) comprises an anionic ion exchanger material, which is fixed to a perforated carrier material inserted as a layer between the electrolyte reservoir (2) and the electrode (1).

7. A combination electrode as under Claims 1 to 6, **characterised in that** the measuring system (9) which serves to monitor the consumption state of the ion exchanger material is arranged between the ion exchanger element (4) and the dimensionally stable electrode (1).

8. A combination electrode as under Claims 1 to 7, **characterised in that** the measuring system (9) for cyclic sensing of the consumption state of the ion exchanger material (4) is linked to a computer network via measuring electronics.

9. A combination electrode as under Claims 1 to 8, **characterised in that** the measuring system (9) comprises a sensor or an auxiliary electrode.

10. A combination electrode as under Claim 9, **characterised in that** the sensor is a chloride sensor.

11. A method for control of an electrode system for the short-term electrochemical amelioration of corrosion-damaged reinforced concrete using a combination electrode as under Claims 1 to 10, **characterised in that** the compound electrodes (combination electrodes) are controlled by means of a pulse-width-modulated direct voltage, whereby a constant voltage of 40 volts without current limitation is used for the individual compound electrodes, the rolled-out cylindrical surface area of the covering reinforcement is an initial parameter for dimensioning of the process, a chloride sensor is used for signalling and to switch off the process upon saturation of the ion exchanger, the falling edge of the pulse-width-modulated direct voltage is taken for permanent IR correction and there is a facility for parallel local and remote control across any chosen distances.

12. A method as under Claim 11, **characterised in that** the pulse-width-modulated direct voltage is applied to each closely arranged compound electrode, which in turn provides the necessary signals to control the pulse-width-modulated direct voltage.

13. A method as under Claim 11, **characterised in that** the pulse-width-modulated direct voltage is adapted to the control demands in terms of frequency and duty factor.

14. A method as under Claim 11, **characterised in that** the rolled-out cylindrical surface area of the previously measured covering reinforcement is applied as the surface of the working electrode (cathode).

15. A method as under Claim 11, **characterised in that** the corresponding measuring signal of the chloride sensor integrated in the compound electrode leads to signalling of an arising state of saturation in the ion exchanger and to switching off of the process in the corresponding electrode.

16. A method as under Claim 11, **characterised in that** continuous IR correction of the reference potentials of a compound electrode is performed by measuring and evaluating the voltage drop at the falling edge of an ON signal.

## Revendications

1. Electrode combinée pour l'assainissement électrochimique de béton armé atteint de corrosion, **caractérisée en ce qu'**elle présente les composantes suivantes :
- électrode de stabilité dimensionnelle (1) ;
- accumulateur électrolytique préfabriqué réutilisable (2) ;
- protection contre l'évaporation (3) ;
- élément d'échangeur d'ions anionique préfabriqué, échangeable (4) ;
- fixation centrale avec cheville, barre d'ancrage et dispositif à serrage rapide excentrique (5);
- électrode de référence (6) à la tête de la cheville ;
- dispositif d'humidification (7)
- interrupteur de puissance pour le réglage anodique (8);
- système de mesurage (9) pour la recherche de l'état au niveau de l'élément d'échangeur d'ions ainsi que
- connectique pour l'électrode de référence.

2. Electrode combinée suivant la revendication 1, **caractérisée en ce que** l'électrode de stabilité dimensionnelle (1), la protection contre l'évaporation (3), l'accumulateur électrolytique (2) et l'élément d'échangeur d'ions (4) sont reliés entre eux sous la forme d'une construction sandwich.

3. Electrode combinée suivant la revendication 1 ou 2, **caractérisée en ce qu'**elle présente une superficie d'environ 0,6 x 0,6 m².

4. Electrode combinée suivant la revendication 1 à 3, **caractérisée en ce que** l'électrode de stabilité dimensionnelle (1) est en titane, tantale ou autre matière similaire à surface modifiée.

5. Electrode combinée suivant la revendication 1 à 4, **caractérisée en ce que** l'accumulateur électrolytique (2) est composé de matériau minéral fibreux, de préférence de mat de fibre de verre.

6. Electrode combinée suivant la revendication 1 à 5, **caractérisée en ce que** l'élément d'échangeur d'ions (4) comprend un matériau d'échangeur d'ions anionique fixé sur un support perforé disposé sous forme de couche entre l'accumulateur électrolytique (2) et l'électrode (1).

7. Electrode combinée suivant la revendication 1 à 6, **caractérisée en ce que** le système de mesurage (9), lequel sert au contrôle de l'état d'utilisation du matériau de l'échangeur d'ions, est disposé entre l'élément d'échangeur d'ions (4) et l'électrode de stabilité dimensionnelle (1).

8. Electrode combinée suivant la revendication 1 à 7, **caractérisée en ce que** le système de mesurage (9) est relié à un réseau d'ordinateurs par l'intermédiaire d'une électronique de mesurage en vue de l'analyse cyclique de l'état d'utilisation du matériau de l'élément d'échangeur d'ions (4).

9. Electrode combinée suivant la revendication 1 à 8, **caractérisée en ce que** le système de mesurage (9) se compose d'un palpeur ou d'une électrode auxiliaire.

10. Electrode combinée suivant la revendication 9, **caractérisée en ce que** le palpeur est un palpeur chloruré.

11. Procédé de commande d'un système d'électrodes en vue de l'assainissement électrochimique à court terme de béton armé atteint de corrosion par l'emploi d'une électrode combinée conformément aux revendications 1 à 10, **caractérisé en ce que** la commande des électrodes
compound (électrodes combinées) a lieu au moyen d'une tension continue ayant subi une modulation d'impulsions en largeur, sachant qu'est utilisée une tension constante de 40 volts sans limitation de courant pour les électrodes combinées individuelles, **caractérisé en ce que** la surface cylindrique développée de l'armature de couverture représente un paramètre initial pour le dimensionnement du procédé, **en ce qu'**est utilisé un palpeur chloruré pour la signalisation et la mise hors circuit du procédé en cas de saturation de l'échangeur d'ions, que le flanc de coupure de la tension continue ayant subi une modulation d'impulsions en largeur entre en action pour la correction à IR permanente et que la commande in situ ou la télécommande parallèle est en outre possible à des distances quelconques.

12. Procédé suivant la revendication 11, **caractérisé en ce que** la tension continue ayant subi une modulation d'impulsions en largeur est utilisée sur chaque électrode combinée disposée sur un petit espace, étant entendu que ladite électrode envoie de son côté les signaux nécessaires au réglage de la tension continue ayant subi une modulation d'impulsions en largeur.

13. Procédé suivant la revendication 11, **caractérisé en ce que** la tension continue ayant subi une modulation d'impulsions en largeur est adaptée aux exigences de réglage aussi bien pour ce qui est de la fréquence que du taux d'impulsions.

14. Procédé suivant la revendication 11, **caractérisé en ce que** la surface cylindrique développée de l'armature de couverture mesurée auparavant est utilisée en tant que superficie de l'électrode de travail (cathode).

15. Procédé suivant la revendication 11, **caractérisé en ce que** le signal de mesure correspondant du palpeur chloruré intégré dans l'électrode compound conduit à la signalisation de l'état de saturation déclenché dans l'échangeur d'ions ainsi qu'à la mise hors circuit du procédé dans l'électrode compound concernée.

16. Procédé suivant la revendication 11, **caractérisé en ce que** une correction à IR continue des potentiels de référence d'une électrode compound a lieu par le mesurage et l'évaluation de la chute de tension au flanc de coupure d'un signal ON.
